# EUROPÄISCHE PATENTANMELDUNG

(11) **EP 0 767 078 A1**
(43) Veröffentlichungstag der Anmeldung: **09.04.1997**
(21) Anmeldenummer: 96115885.4
(22) Anmeldetag: 04.10.1996
(51) Int. Cl.: B60C 25/20

(54) **Vorrichtung zur Montage und Demontage von gummigefederten Rädern der Radsätze von Schienenfahrzeugen**

(30) Priorität: 06.10.1995 DE 19537180
(71) Anmelder: VSG Verkehrstechnik GmbH, 44793 Bochum (DE); DEUTSCHE BAHN AG, 10365 Berlin (DE)
(72) Erfinder: Georgi, Dietmar, 04209 Leipzig (DE); Bowi, Markus, 44577 Castrop-Rauxel (DE); Murawa, Franz, 44805 Bochum (DE); Schneider, Jürgen, Dr., 44797 Bochum (DE)
(74) Vertreter: Cohausz & Florack

(57) **Zusammenfassung**

Die Erfindung betrifft eine Vorrichtung zur Montage und Demontage von Rädern (50) der Radsätze (51) von Schienenfahrzeugen, wobei die Räder (50) eine Radfelge (55) aufweisen, auf die ein Radreifen (52) unter Zwischenlage von federnden Gummikörpern (53) aufgepreßt ist, die durch einen von der freien Stirnseite des Rades (50) zwischen die Gummikörper (53) und die Radfelge (55) oder den Radreifen (52) gepreßten Felgenring (54) gehalten sind. Mit der erfindungsgemäßen Vorrichtung ist es möglich, bei Verwendung einer einzigen Krafterzeugungseinrichtung (12) die zur Montage und Demontage von gummigefederten Rädern (50) erforderlichen Arbeiten zum weitaus überwiegenden Teil automatisch durchzuführen. Dies wird durch eine den Anforderungen des jeweiligen Arbeitsganges entsprechende Verkopplung der einzelnen Elemente der erfindungsgemäßen Vorrichtung mit der Krafterzeugungseinrichtung (12) und ein gleichzeitiges geeignetes Abstützen der Elemente gegeneinander bzw. gegen das zu bearbeitende Rad (50) erreicht.

## Beschreibung

Die Erfindung betrifft eine Vorrichtung zur Montage und Demontage von Rädern der Radsätze von Schienenfahrzeugen, wobei die Räder eine Radfelge aufweisen, auf die ein Radreifen unter Zwischenlage von federnden Gummikörpern aufgepreßt ist, die durch einen von der freien Stirnseite des Rades zwischen die Gummikörper und die Radfelge oder den Radreifen gepreßten Felgenring gehalten sind. Eine derartige Vorrichtung ist aus der Praxis bekannt.

Bei der bekannten Vorrichtung kann der Felgenring durch Einpressen von öl zwischen die Gummikörper und den Ring aus dem durch Radreifen, Gummikörper, Felgenring und Radfelge gebildeten preßverband herausgelöst werden. Anschließend können der Radreifen und die Gummikörper mittels Abpreßbolzen von der Radfelge abgezogen werden. Zum Aufpressen des mit neuen Gummikörpern bestückten Radreifens ist die bekannte Vorrichtung mit Aufpreßbolzen ausgestattet, die, wie die Abpreßbolzen, hydraulisch betätigbar sind. Der zum Abpressen und Aufpressen benötigte Hydraulikdruck wird dabei durch eine manuell betätigbare Hydraulikpumpe erzeugt.

Neben der voranstehend erläuterten Vorrichtung sind unabhängige Ab- und Aufpreßringe bekannt, die mit hydraulisch betätigbaren Hohlkolbenzylindern bestückt sind. Auch bei diesen bekannten Ab- und Aufpreßringen wird eine hydraulische Handpumpe zum Trennen des Felgenrings, des Radreifens und des Gummikörpers von der Radfelge bzw. zum Aufpressen dieser Teile auf die Radfelge eingesetzt.

Der gemeinsame Nachteil der bekannten Vorrichtungen besteht darin, daß zur Demontage bzw. zur Montage jeweils die Abpreß-/Aufpreßbolzen bzw. die Abpreß-/Aufpreßringe manuell gewechselt werden müssen. Hierzu ist ein hoher Arbeitszeitaufwand erforderlich.

Die Aufgabe der Erfindung besteht darin, eine Vorrichtung der eingangs genannten Art zu schaffen, mit der ein zumindest teilweise automatisierbares Montieren und Demontieren der Räder bei verkürztem Zeitaufwand möglich ist.

Diese Aufgabe wird erfindungsgemäß durch eine Vorrichtung der eingangs genannten Art gelöst, welche mit einem Fahrgestell, mit einem auf dem Fahrgestell angeordneten, in eine im wesentlichen vertikal und eine im wesentlichen horizontal ausgerichtet Stellung schwenkbaren Ab- und Aufpreßring, mit von dem Ab- und Aufpreßring getragenen Gegendruckelementen, welche an die von dem Ab- und Aufpreßring abgewandte rückwärtige Stirnseite der Radfelge anlegbar sind, mit einer mit dem Ab- und Aufpreßring fest verbundenen Krafterzeugungseinrichtung, mit einem an der Radfelge abstützbaren Gegenhaltering, der mittels einer ersten Kupplungseinrichtung mit der Krafterzeugungseinrichtung verkuppelbar ist und nach seiner Verkupplung mittels der Krafterzeugungseinrichtung koaxial und relativ zu dem Ab- und Aufpreßring bewegbar ist, mit einer zweiten Kupplungseinrichtung, über die der Felgenring mit dem Ab- und Aufpressring verkoppelbar ist, mit einer koaxial zu dem Gegenhaltering verschiebbaren und mit dem Radreifen verriegelbaren Verriegelungseinrichtung, welche an dem Felgenring abstützbar ist, und mit einer mit einer Öldruckerzeugungseinrichtung verbundenen Öldruckleitung ausgestattet ist, die an einen Ölabpreßanschluß des Felgenringes anschließbar ist.

Mit der erfindungsgemäßen Vorrichtung ist es möglich, bei Verwendung einer einzigen Krafterzeugungseinrichtung die zur Montage und Demontage von gummigefederten Rädern erforderlichen Arbeiten zum weitaus überwiegenden Teil automatisch durchzuführen. Dies wird durch eine den Anforderungen des jeweiligen Arbeitsganges entsprechende Verkopplung der einzelnen Elemente der erfindungsgemäßen Vorrichtung mit der Krafterzeugungseinrichtung und ein gleichzeitiges geeignetes Abstützen der Elemente gegeneinander bzw. gegen das zu bearbeitende Rad erreicht. Auf diese Weise ist durch die Ausnutzung der relativen Beweglichkeit der Einzelelemente der erfindungsgemäßen Vorrichtung gegeneinander der apparative Aufwand für das automatisierte Montieren und Demontieren der Räder auf ein Minimum reduziert.

Da die einzelnen Bewegungs- und Kupplungsvorgänge automatisch durchgeführt werden können und auch kein Umrüsten der Vorrichtung zwischen dem Montieren und Demontieren erforderlich ist, ist der Zeitaufwand für die Montagevorgänge ebenfalls auf ein Minimum reduziert.

Vorzugsweise sollte die Krafterzeugungseinrichtung als hydraulisch betätigbare Kolben-Zylindereinheit ausgebildet sein. Ebenso günstig ist es, wenn die erste Kupplungseinrichtung eine mit ihrem einen Ende mit dem Felgenring verbindbare und an ihrem anderen Ende einen Anschlag tragende Bolzenstange und ein Kupplungsglied aufweist, das zwischen den Anschlag der Bolzenstange und den Ab- und Aufpreßring schwenkbar ist.

Eine besonders kompakte Bauform der erfindungsgemäßen Vorrichtung läßt sich in diesem Zusammenhang dadurch erreichen, daß der Zylinder der Kolben-Zylinder-Einheit fest mit dem Ab- und Aufpreßring verbunden ist und der Kolben der Kolben-Zylinder-Einheit eine axiale Durchgangsbohrung aufweist, durch die die Bolzenstange geführt ist, daß das den Anschlag tragende Ende der Bolzenstange über das freie Ende des Zylinders hinausragt und daß das Kupplungsglied zwischen den Anschlag und den Zylinder der Kolben-Zylinder-Einheit schwenkbar ist.

Sofern die erste Kupplungseinrichtung ein verschwenkbares Kupplungsglied aufweist, ist es im Hinblick auf eine zusätzliche Reduzierung des apparativen Aufwandes günstig, wenn die zweite Kupplungseinrichtung als Druckplatte ausgebildet ist, welche gemeinsam mit dem Kupplungsglied der ersten Kupplungseinrichtung verschwenkbar ist.

Vorteilhaft im Hinblick auf eine kompakte Bauform der erfindungsgemäßen Vorrichtung ist es auch, wenn der Gegenhaltering auf einer fest mit dem An- und Aufpreßring verbundenen Führungshülse verschiebbar angeordnet ist.

Vorzugsweise sollte die Verriegelungseinrichtung als koaxial zu dem Ab- und Aufpreßring verschiebbarer Verriegelungsring ausgebildet sein und mindestens ein Arretierelement aufweist, mittels dessen der Verriegelungsring mit dem Radreifen verriegelbar ist

Die vollautomatische Durchführung der einzelnen Arbeitsschritte läßt sich dadurch erreichen, daß die Bewegung der einzelnen Elemente während des Ab- und Aufpreßens in Abhängigkeit von Überwachungssignalen von Initiatoren mittels einer zentralen Steuereinrichtung steuerbar sind. Bei diesen Initiatoren kann es sich um Sensoren oder Dedektoren handeln, die die Stellung der einzelnen Elemente relativ zueinander überwachen und bei Erreichen bestimmter vorgegebener Positionen Signale an die Steuereinrichtung abgeben, welche diese bei der Auslösung von Steuersignalen beispielsweise für die Krafterzeugungseinrichtung oder die Einrichtungen zur Betätigung der Kupplungseinrichtungen berücksichtigt.

Ein gleichmäßiges, verkantungsfreies Ab- bzw. Aufpressen des Radreifens bzw. des Felgenrings von der bzw. auf die Radfelge kann dadurch erreicht werden, daß jeweils mindestens drei in regelmäßigen Winkelabständen angeordnete Gegendruckelemente und Arretierelemente vorhanden sind.

Die Montage- und Demontagevorgänge können zusätzlich dadurch erleichtert werden, daß der Radsatz mittels eines Radsatzhubtisches in eine Arbeitsposition hebbar ist. Dabei können zwei erfindungsgemäße Vorrichtung vorgesehen sein, die diametral gegenüberliegend den Rädern des Radsatzes zugeordnet sind. Ist dies nicht der Fall, so ist es günstig, wenn der Radsatzhubtisch um eine vertikal ausgerichtete Achse um mindestens 180° verschwenkbar ist. Auf diese Weise ist es möglich, mit einer einzigen Vorrichtung beide Seiten des Radsatzes zu bearbeiten, ohne daß aufwendige Heb- oder Umsetzvorgänge durchgeführt werden müssen.

Eine weitere Erleichterung der Handhabung des Radsatzes für das Bedienungspersonal kann dadurch erreicht werden, daß der Radsatz auf dem Radsatzhubtisch rollengelagert ist. Auf diese Weise kann der Radsatz problemlos in eine optimale Bearbeitungsposition gedreht werden. Ebenfalls günstig im Hinblick auf das Vermeiden einer übermäßigen körperlichen Belastung des Bedienungspersonals und den apparativen Aufwand ist es, wenn der Radsatz auf einem Gleisstück in die Vorrichtung beförderbar ist und an dem der Vorrichtung zugeordneten Ende des Gleisstücks einerRadsatzfangvorrichtung angeordnet ist.

Nachfolgend wird die Erfindung anhand einer ein Ausführungsbeispiel darstellenden Zeichnung näher erläutert. Es zeigen:
- Fig. 1: eine Demontage- und Montagevorrichtung in Grundstellung in einer Seitenansicht,
- Fig. 2: die Demontage- und Montagevorrichtung nach Fig. 1 in einer ersten Arbeitsstellung,
- Fig. 3: die Demontage- und Montagevorrichtung in einer zweiten Arbeitsstellung,

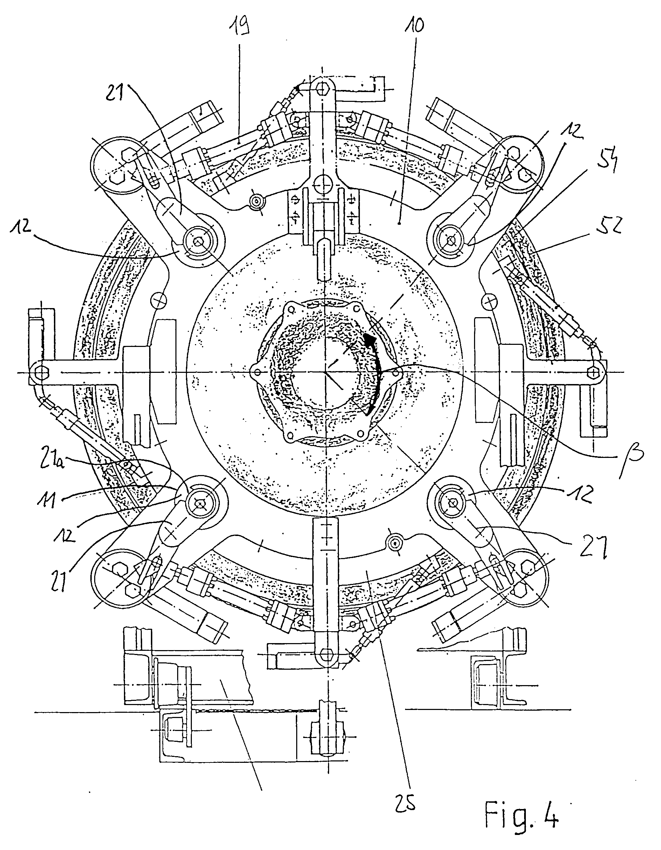

- Fig. 4: die Demontage- und Montagevorrichtung in der in Fig. 2 gezeigten Arbeitsstellung in einer frontalen, teilweise aufgebrochenen Ansicht,
- Fig. 5: die Demontage- und Montagevorrichtung zu Beginn des Abpreßvorgangs in einer ausschnittsweisen, teilweise geschnittenen seitlichen Ansicht,
- Fig. 6: die Demontage- und Montagevorrichtung am Ende des Abpreßvorgangs in einer der Fig. 5 entsprechenden Ansicht,
- Fig. 7: die Demontage- und Montagevorrichtung zu Beginn des Aufpreßvorgangs in einer den Fig. 5 und 6 entsprechenden Ansicht,
- Fig. 8: die Demontage- und Montagevorrichtung am Ende des Aufpreßvorgangs in einer den Figuren 5 bis 7 entsprechenden Ansicht.

Die Demontage- und Montagevorrichtung 1 weist ein auf einer Schienenführung 2 verfahrbares Fahrgestell 3 auf, das an seinem vorderen Ende einen Lagerbock 4 trägt. An seinem anderen Ende ist in einem Gehäuse 5 eine weiter nicht dargestellte Hydraulik- und Steuerungseinrichtung angeordnet. An die Hydraulikeinrichtung ist ein ebenfalls nicht gezeigter Öldruckschlauch angeschlossen.

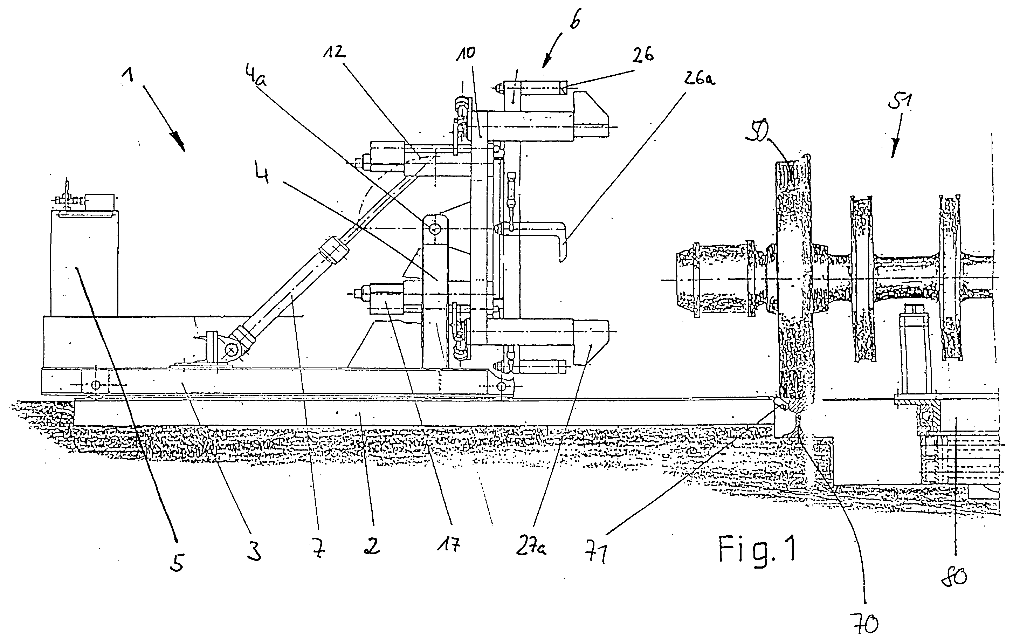

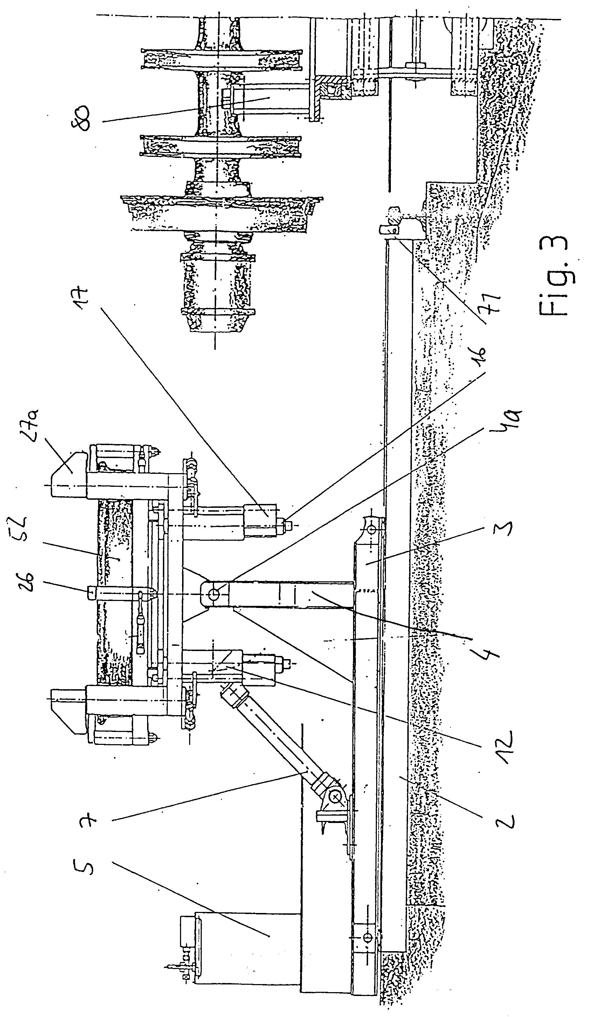

Auf dem Lagerbock 4 ist in einem Lager 4a eine Ab- und Aufpreßeinrichtung 6 derart schwenkbar gelagert, daß die Ab- und Aufpreßeinrichtung 6 aus der in Fig. 1 gezeigten, im wesentlichen vertikal ausgerichteten Arbeitsstellung in die in Fig. 3 gezeigte, im wesentlichen waagerecht ausgerichtete Arbeitsstellung geschwenkt werden kann. Das Verschwenken der Ab- und Aufpreßeinrichtung 6 erfolgt mittels eines hydraulischen Zylinders 7, dessen zylinderseitiges Ende gelenkig mit dem Fahrgestell 3 und dessen kolbenseitiges Ende mit der Ab- und Aufpreßeinrichtung 6 verbunden ist.

Die Ab- und Aufpreßeinrichtung 6 weist einen Ab- und Aufpreßring 10 auf. In jeder von vier in regelmäßigem Winkelabstand β angeordneten Öffnungen 11 des Ab- und Aufpreßrings 10 sind Kolben-Zylinder-Einheiten 12 derart eingesetzt, daß der Zylinder 13 jeder Kolben-Zylinder-Einheit 12 fest mit dem Ab- und Aufpreßring 10 verbunden ist.

Die Kolben-Zylinder-Einheiten 12 weisen einen Kolben 14 auf, der mit einer axial sich erstreckenden Durchgangsbohrung versehen ist. Durch die Durchgangsbohrung ist jeweils eine Bolzenstange 15 geführt, die an ihrem freien, über die Rückseite 13a des Zylinders 13 hinausragenden Ende einen Anschlag 16 trägt. An ihrem anderen Ende weist jede der Bolzenstangen 15 einen Gewindeabschnitt 15a auf.

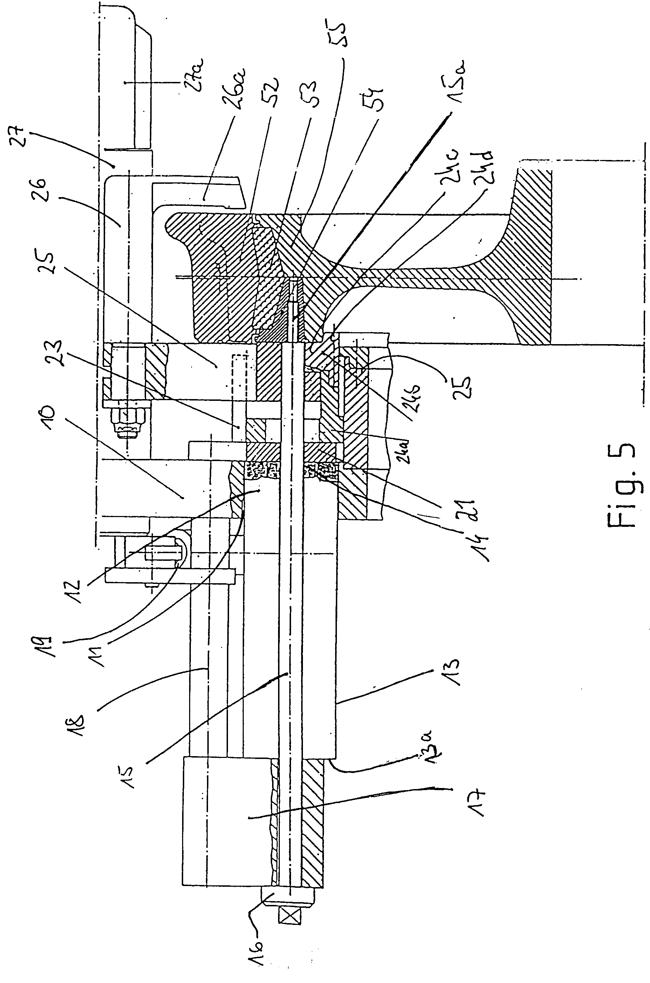

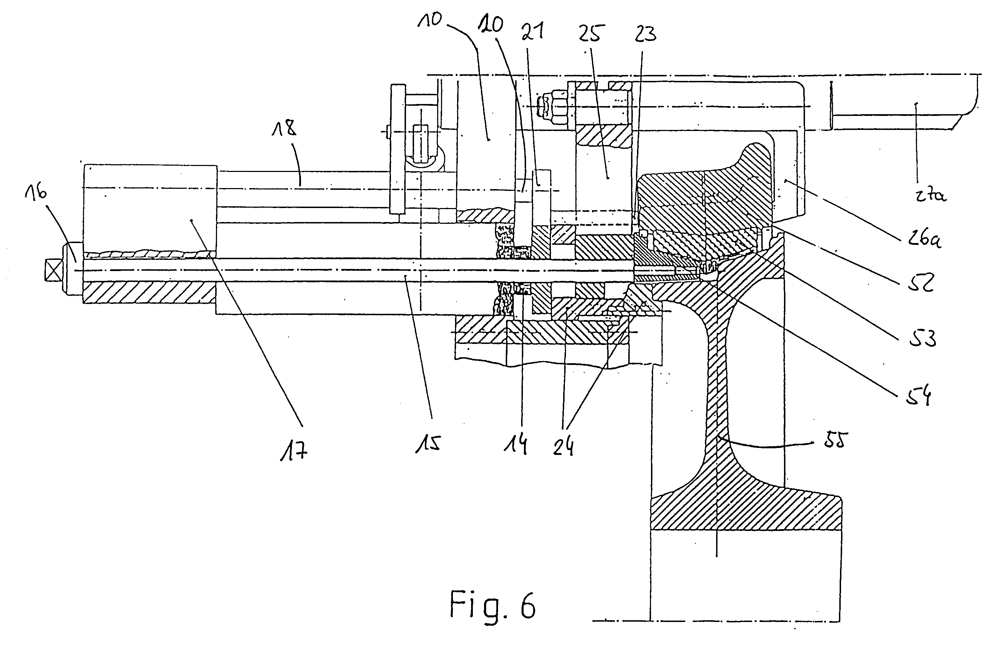

In den freien Abstand zwischen dem Anschlag 16 und der Rückseite 13a des Zylinders 13 ist ein Kupplungsglied 17 schwenkbar, welches eine Nut aufweist, in der bei eingeschwenktem Kupplungsglied 17 die Bolzenstange 15 aufgenommen ist. Bei eingeschwenktem Kupplungsglied 17 ist die Bolzenstange 15 über den Anschlag 16, das Kupplungsglied 17 und den Zylinder 13 an dem Ab- und Aufpreßring 10 abgestützt (Fig. 5,6).

Das Kupplungsglied 17 ist drehfest jeweils mit dem einen Ende einer an dem Ab- und Aufpreßring 10 gelagerten Welle 18 verbunden, die mittels jeweils einer hydraulisch betätigbaren zweiten Kolben-Zylinder-Einheit 19 verschwenkbar ist. In die Welle 18 einschiebbar und drehfest mit dieser verbunden ist jeweils eine zweite Welle 20, deren freies Ende auf der von dem Kupplungsglied 17 abgewandten Seite des Ab- und Aufpreßrings 10 endet. An diesem Ende der Welle 20 ist jeweils eine Druckplatte 21 drehfest befestigt, welche eine Ausnehmung 21a aufweist, deren Durchmesser im wesentlichen dem Durchmesser der Bolzenstange 15 entspricht. Zusätzlich trägt jede der Druckplatten 21 auf ihrer freien Stirnseite einen Anschlag 23.

Bei eingeschwenktem Kupplungsglied 17 befindet sich auch die Druckplatte 21 aufgrund der drehfesten Verbindung der Wellen 18, 20 in ihrer eingeschwenkten Stellung. In dieser Stellung liegt an ihrer der jeweiligen Kolben-Zylinder-Einheit 12 zugeordneten Seite der Kolben 14 der Kolben-Zylinder-Einheit 12 an, während auf der anderen, freien Seite der Druckplatte 21 ein Gegenhaltering 24 abgestützt ist.

Der Gegenhaltering 24 besteht aus zwei fest miteinander verbundenen Ringelementen 24a,b und ist auf einer fest mit dem Ab- und Aufpreßring 10 verbundenen und in dessen innere Öffnung eingesetzten Hülse 25 koaxial zu dem Ab- und Aufpreßring 10 verschiebbar. Das der vorderen freien Stirnseite der Ab- und Aufpreßeinrichtung 6 zugeordnete Ringelement 24b des Gegenhalterings 24 weist einen umlaufenden Kragen 24c auf, an dessen vordere freie Ringfläche ein umlaufender Absatz 24d angeformt ist.

Auf dem Gegenhaltering 24 verschiebbar angeordnet ist jeweils ein Verriegelungsring 25, der Durchgangsbohrungen für jede der Bolzenstangen 15 aufweist. Der Verriegelungsring 25 trägt vier in einem regelmäßigen Winkelabstand angeordnete und verschwenkbar gelagerte Arretierhebel 26, deren gekröpfter Abschnitt 26a sich beabstandet zur Stirnfläche des Verriegelungsrings 25 im wesentlichen parallel zu dieser erstreckt. Am inneren Randbereich seiner dem umlaufenden Kragen 24c des Gegenhalterings 24 zugeordneten Stirnfläche ist in den Verriegelungsring 12 eine Nut eingeformt, deren Tiefe im wesentlichen der Dicke des Kragens 24c entspricht.

An dem Ab- und Aufpreßring 10 sind vier ebenfalls in regelmäßigem Winkelabstand angeordnete Gegendruckelemente 27 schwenkbar gelagert. Die Gegendruckelemente 27 weisen wie die Arretierhebel 26 einen gekröpften Abschnitt 27a auf, der beabstandet zu der Stirnfläche des Ab- und Aufpreßrings 10 angeordnet ist und sich parallel zu dieser erstreckt. Dabei ist die Länge des gekröpften Abschnitts 27a größer als die des gekröpften Abschnitts 26a der Arretierhebel 26.

Jede der Bewegungen der voranstehend beschriebenen Elemente der Ab- und Aufpreßeinrichtung 6, insbesondere die Betriebsstellung der Kolben-Zylinder-Einheiten 12 und die Lage des Verriegelungsrings 25 bezüglich der Druckplatten 21, wird durch weiter nicht gezeigte Initiatoren erfaßt. Die Initiatoren sind mit der in dem Gehäuse 5 untergebrachten Steuereinrichtung verbunden, welche den Ablauf der Demontage und Montage steuert.

Die in den Figuren gezeigte Vorrichtung ist zur Demontage und Montage eines Rades 50 bestimmt, das Teil eines Radsatzes 51 sind. Jedes der Räder 50 des Radsatzes weist einen Radreifen 52, eine aus Gummikörpern 53 gebildete federnde Zwischenlage, einen Felgenring 54 und eine Radfelge 55 auf. Im montierten Zustand ist der Radreifen 52 im Preßsitz über die Gummikörper 53 und den von der freien Stirnseite des Rades 50 zwischen die Gummikörper 53 und die Radfelge 55 gepreßten Felgenring 54 auf der Radfelge 55 gehalten.

Der Felgenring 54 ist mit vier in regelmäßigem Winkelabstand angeordneten Gewindebohrungen versehen, in die die Gewindeabschnitte 15a der Bolzenstangen 15 einschraubbar sind. Zusätzlich weist der Felgenring 54 einen nicht gezeigten Ölabpreßanschluß auf.

Die Demontage- und Montagevorrichtung 1 arbeitet wie folgt:

Der zu bearbeitende Radsatz 51 wird auf einem Gleisstück 70 zu der Demontage- und Montagevorrichtung 1 gerollt. An dem der Demontage- und Montagevorrichtung 1 zugeordneten Ende des Gleisstücks 70 ist eine aus einer nicht gezeigten Rücklaufsperre und einem einen Anschlag und ein Aufsetzstück umfassenden Ablaufberg gebildete, an sich bekannte Radfangeinrichtung 71 angeordnet. Durch die Radfangeinrichtung 71 wird der Radsatz 51 in einer im wesentlichen zur Längsachse der Demontage- und Montagevorrichtung fluchtenden Stellung arretiert, wenn er das Ende des Gleisstücks 70 erreicht hat (Fig. 1).

Die Ab- und Aufpreßeinrichtung 6 der Demontage- und Montagevorrichtung 1 befindet sich zu diesem Zeitpunkt in ihrer vertikalen Verschwenkstellung, bei der die Stirnfläche des Ab- und Aufpreßrings 10 im wesentlichen parallel zur freien Stirnfläche des zu bearbeitenden Rades 50 ausgerichtet ist.

Sobald der Radsatz 51 in seiner Endstellung arretiert ist, kann er durch einen Hubtisch 80 in die Bearbeitungsstellung gehoben werden. Der Hubtisch 80 ist in ebenfalls an sich bekannter Weise ausgebildet. Er weist eine nicht gezeigte Rollenaufnahme für die Achse des Radsatzes 52 auf. Diese Rollenaufnahme ist derart ausgebildet, daß der Radsatz 52 auf einfache Weise manuell um seine Achse gedreht werden kann. Darüber hinaus ist der Hubtisch 80 um eine vertikal ausgerichtete Achse schwenkbar, um die Bearbeitung beider Räder 50 des Radsatzes 51 ohne dessen Umsetzen zu ermöglichen.

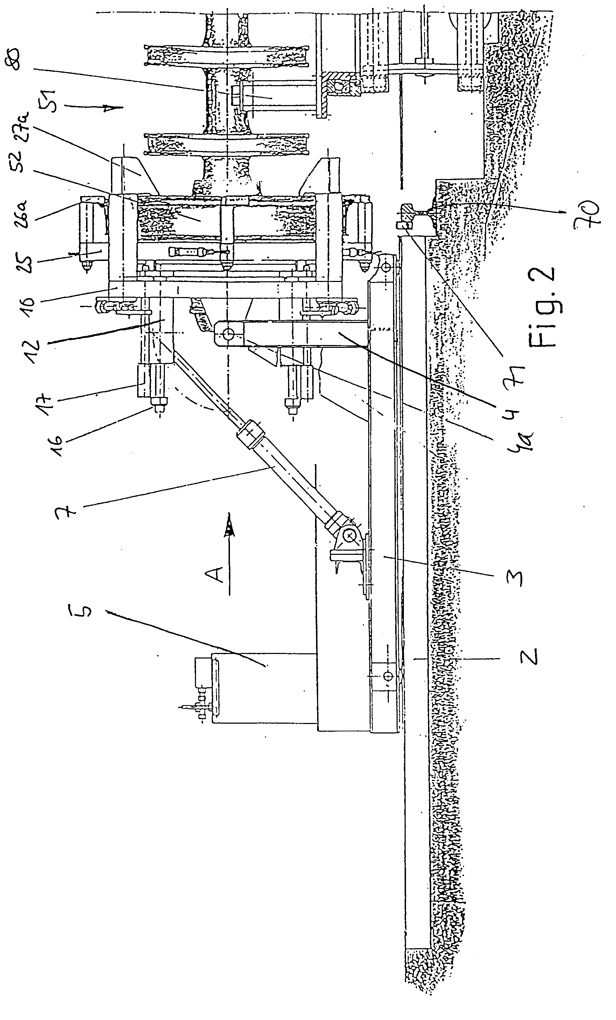

Wenn sich der Radsatz 51 in der Bearbeitungsstellung befindet (Fig. 2), wird er so gedreht, daß die Ölabpreßbohrung des Felgenrings 54 von oben leicht zugänglich ist und mit der nicht gezeigten Öldruckleitung verbunden werden kann. Anschließend wird die Demontage- und Montagevorrichtung 1 an das zu bearbeitende Rad 50 herangefahren, bis der Gegenhaltering 24 mit seinem Kragen 24c an der Radfelge 54 anliegt. In dieser Stellung sind das Rad 50 und die Ab- und Aufpreßeinrichtung 6 über den umlaufenden Absatz 24d zentriert.

Die Kupplungsglieder 17 und die Druckplatten 21 befinden sich zu diesem Zeitpunkt in ihrer in den Fig. 5 und 6 gezeigten eingeschwenkten Stellung. Nun werden die Gewindeabschnitte 15a der Bolzenstangen 15 in die entsprechenden Bohrungen des Felgenrings 54 eingeschraubt. Nach dem Einschrauben ist der Felgenring 54 über die Bolzenstange 15, das Kupplungsglied 17 und den Zylinder 13 mit dem Ab- und Aufpreßring 10 in Achsrichtung fest verkoppelt.

Nun werden die Arretierhebel 26 derart verschwenkt, daß ihr jeweiliger abgekröpfter Abschnitt 26a die von dem Ab- und Aufpreßring 10 abgewandten Rückseite des Radreifens 52 umgreift. Die Abschnitte 27a der Gegendruckelemente 27 sind dagegen von der Rückseite des Radreifens 52 weg geschwenkt.

Nach der durch das Verschwenken der Arretierhebel 26 erfolgten Verriegelung des Verriegelungsrings 25 mit dem Radreifen 52 wird Öl durch den Ölabpreßanschluß zwischen den Felgenring 54 und die Radfelge 55 gepreßt. Durch das eingepreßte Öl wird der Felgenring 52 geweitet, bis er sich von der Radfelge 55 löst.

Sobald das Lösen des Felgenrings 52 von der Radfelge 55 durch eine Druckabfall in der Öldruckleitung festgestellt wird, beginnt der Abpreßvorgang. Zu diesem Zweck werden die Kolben-Zylinder-Einheiten 12 mit Druck beaufschlagt. Da der Kolben 14 der Kolben-Zylinder-Einheiten 12 über die jeweilige Druckplatte 21 und den Gegenhaltering 24 gegen die Radfelge 55 abgestützt ist, bewirkt dies, daß sich der Zylinder 13 und mit ihm der Ab- und Aufpreßring 10 sowie der über die Bolzenstangen 15 und die Kupplungsglieder 17 mit dem Ab- und Aufpreßring 10 verbundene Felgenring 54 von der Radfelge 55 weg bewegen. Auf diese Weise wird zunächst der Felgenring 54 aus dem Preßverbund des Rades 50 unter Mitnahme des an seiner Stirnfläche anliegenden Verriegelungsringes 25 herausgezogen, bis die abgekröpften Abschnitte 26a der Arretierhebel 26 an der Rückseite des Radreifens 52 anliegen. Bei fortgesetzter Betätigung der Kolben-Zylinder-Einheiten 12 wird auch der Radreifen 52 und mit ihm die Gummikörper 53 von der Radfelge 55 abgezogen. An dem Radfelgenring 54 kleben bleibende Gummikörper 53 werden durch den Anschlag 23 der Druckplatten 21 abgestreift.

Sobald die entsprechenden Initiatoren feststellen, daß der Verriegelungsring 25 die Druckplatten 21 erreicht hat (Fig. 6), erfolgt an die Bedienungsperson das Signal zum Trennen der Öldruckleitung. Die Demontage- und Montagevorrichtung 1 kann nun unter vollständigem Abziehen des Radreifens 52 von der Radfelge 55 in die Ausgangsstellung zurückgefahren werden. Dort wird die Ab- und Aufpreßeinrichtung 6 in die im wesentlichen horizontal ausgerichtete Arbeitsstellung geschwenkt (Fig. 3), in der die Aufarbeitung der Bauteile des Rades 50 problemlos erfolgen kann.

Nach Fertigstellung der Aufarbeitung der Bauteile wird die Ab- und Aufpreßeinrichtung 6 wieder in ihre vertikal ausgerichtete Arbeitsstellung zurückgeschwenkt. Zuvor werden zur Erleichterung des Ausrichtens der Lage des Felgenrings 54 bezüglich der Radfelge 55 nicht gezeigte Führungsbolzen in die Radfelge 55 eingeschraubt. Der Radreifen 52 wird über die Arretierhebel 26 mit dem Verriegelungsring 25 verriegelt, wobei sich die Arretierhebel 2 nicht unmittelbar hinter den Radreifen 52 legen, sondern aufgrund des vorzeitigen Aufsitzens der noch nicht gepreßten Gummikörper 53 an der Anlaufschräge zur Anlage kommen. Dabei befinden sich die Kupplungsglieder 17 und die Druckplatten 21 in ihrer ausgeschwenkten Stellung, so daß die Bolzenstangen 15 und mit ihnen der Felgenring 54 von dem Ab- und Aufpreßring 10 entkoppelt sind.

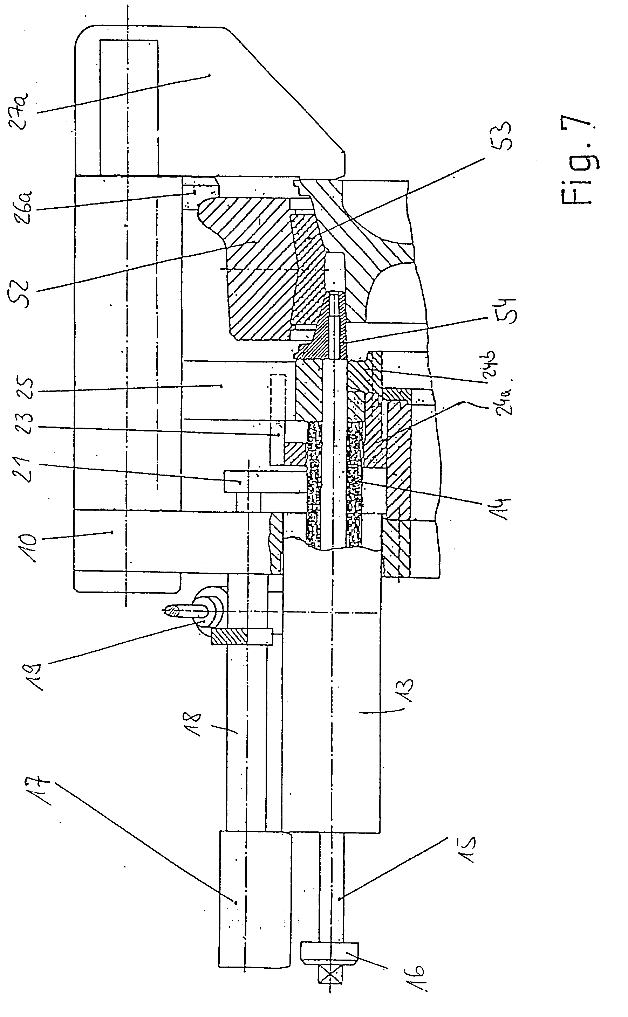

Sobald die Demontage- und Montagevorrichtung wieder an die Radfelge 55 herangefahren und ausgerichtet ist (Fig. 7), werden zunächst die Gegendruckelemente 27 derart verschwenkt, daß ihre abgekröpften Abschnitte 27a an der Rückseite der Radfelge 55 anliegen. Dann wird die Kolben-Zylinder-Einheiten 12 mit Druck beaufschlagt. Da dabei die Lage des Ab- und Aufpreßring 10 aufgrund seiner Abstützung durch die Gegendruckelemente 26 an der Rückseite der Radfelge 55 festgelegt ist, bewirkt dies, daß der Kolben 14 aus der Kolben-Zylinder-Einheiten 12 herausgeschoben wird. Der Kolben 14 drückt dabei den Verriegelungsring 25 zunächst nur unter Mitnahme des Felgenringes 54 in Richtung der Radfelge 55, bis auch der Radreifen 52 an ihm anliegt und mitgenommen wird.

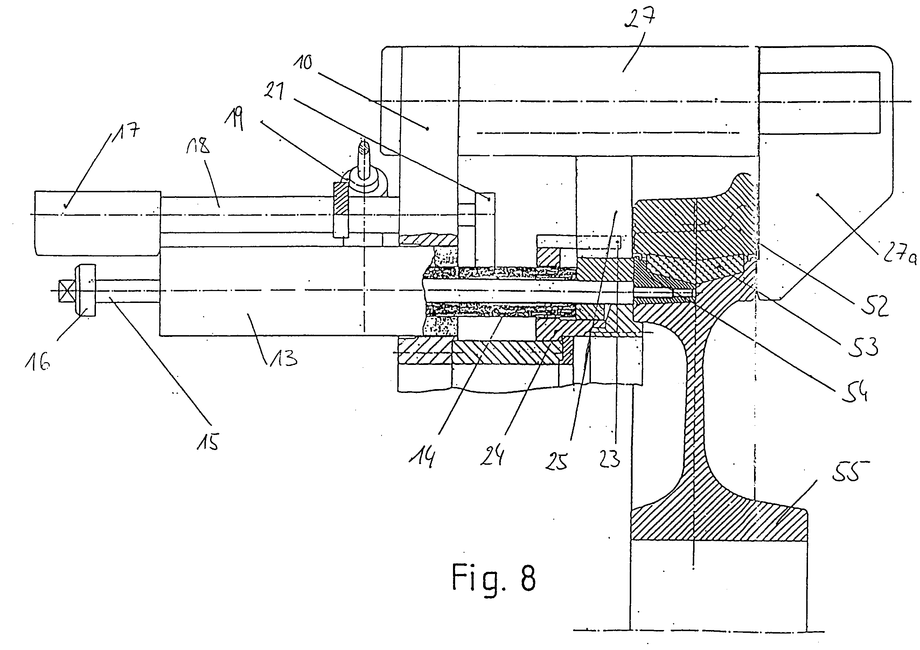

Sobald der Verriegelungsring 25 seine Endstellung, in der sich der Radreifen 52 und der Felgenring 54 in ihrer vorbestimmten Betriebsstellung befinden (Fig. 8), erreicht hat, wird das Aufpressen dieser Bauteile abgebrochen und der Kolben 14 wieder eingefahren. Durch ein anschließendes nochmaliges Andrücken der Ab- und Aufpreßeinrichtung 6 werden deren Elemente wieder in die Ausgangsstellung bewegt, wobei das Erreichen der Ausgangsstellung durch die Initiatoren angezeigt wird. Nun können die Bolzenstangen 15 gelöst, die Führungsbolzen abgeschraubt und der Felgenring 54 durch Einschrauben von nicht gezeigten Sicherungsschrauben an er Radfelge 55 gesichert werden.

## Patentansprüche

1. Vorrichtung zur Montage und Demontage von Rädern (50) der Radsätze (51) von Schienenfahrzeugen, wobei die Räder (50) eine Radfelge (55) aufweisen, auf die ein Radreifen (52) unter Zwischenlage von federnden Gummikörpern (53) aufgepreßt ist, die durch einen von der freien Stirnseite des Rades (50) zwischen die Gummikörper (53) und die Radfelge (55) oder den Radreifen (52) gepreßten Felgenring (54) gehalten sind,
- mit einem Fahrgestell (3),
- mit einem auf dem Fahrgestell (3) angeordneten, in eine im wesentlichen vertikal und eine im wesentlichen horizontal ausgerichtet Stellung schwenkbaren Ab- und Aufpreßring (10),
- mit von dem Ab- und Aufpreßring (10) getragenen Gegendruckelementen (27), welche an die von dem Ab- und Aufpreßring (10) abgewandte rückwärtige Stirnseite der Radfelge (55) anlegbar sind,
- mit einer mit dem Ab- und Aufpreßring (10) fest verbundenen Krafterzeugungseinrichtung (12),
- mit einem an der Radfelge (55) abstützbaren Gegenhaltering (24), der mittels einer ersten Kupplungseinrichtung (21) mit der Krafterzeugungseinrichtung (12) verkuppelbar ist und nach seiner Verkupplung mittels der Krafterzeugungseinrichtung (12) koaxial und relativ zu dem Ab- und Aufpreßring (10) bewegbar ist,
- mit einer zweiten Kupplungseinrichtung (18,24), über die der Felgenring (54) mit dem Ab- und Aufpressring (10) verkoppelbar ist,
- mit einer koaxial zu dem Gegenhaltering (11) verschiebbaren und mit dem Radreifen (52) verriegelbaren Verriegelungseinrichtung (25), welche an dem Felgenring (54) abstützbar ist, und
- mit einer mit einer Öldruckerzeugungseinrichtung verbundenen Öldruckleitung, die an einen Ölabpreßanschluß des Felgenringes (54) anschließbar ist.

2. Vorrichtung nach Anspruch 1, **dadurch gekennzeichnet, daß** die Krafterzeugungseinrichtung (12) als hydraulisch betätigbare Kolben-Zylinder-Einheit ausgebildet ist.

3. Vorrichtung nach Anspruch 1 oder 2, **dadurch gekennzeichnet, daß** die erste Kupplungseinrichtung eine mit ihrem einen Ende (15a) mit dem Felgenring (54) verbindbare und an ihrem anderen Ende einen Anschlag (16) tragende Bolzenstange (24) und ein Kupplungsglied (17) aufweist, das zwischen den Anschlag (16) der Bolzenstange (24) und den Ab- und Anpreßring (10) schwenkbar ist.

4. Vorrichtung nach Anspruch 2 und 3, **dadurch gekennzeichnet, daß** der Zylinder (13) der Kolben-Zylinder-Einheit (12) fest mit dem Ab- und Anpreßring (10) verbunden ist und der Kolben (14) der Kolben-Zylinder-Einheit (13) eine axiale Durchgangsbohrung aufweist, durch die die Bolzenstange (15) geführt ist, daß das den Anschlag (16) tragende Ende der Bolzenstange (15) über das freie Ende (13a) des Zylinders (13) hinausragt und daß das Kupplungsglied (17) zwischen den Anschlag (16) und den Zylinder (13) der Kolben-Zylinder-Einheit (12) schwenkbar ist.

5. Vorrichtung nach einem der Ansprüche 3 oder 4, **dadurch gekennzeichnet, daß** die zweite Kupplungseinrichtung (19) als Druckplatte (25) ausgebildet ist, welche gemeinsam mit dem Kupplungsglied (17) der ersten Kupplungseinrichtung verschwenkbar ist.

6. Vorrichtung nach einem der voranstehenden Ansprüche, **dadurch gekennzeichnet, daß** der Gegenhaltering (24) auf einer fest mit dem An- und Aufpreßring (10) verbundenen Führungshülse (22) verschiebbar ist.

7. Vorrichtung nach einem der voranstehenden Ansprüche, **dadurch gekennzeichnet, daß** die Verriegelungseinrichtung als koaxial zu dem Ab- und Aufpreßring (10) verschiebbarer Verriegelungsring (25) ausgebildet ist und mindestens ein Arretierelement (26) aufweist, mittels dessen der Verriegelungsring (25) mit dem Radreifen (52) verriegelbar ist.

8. Vorrichtung nach einem der voranstehenden Ansprüche, **dadurch gekennzeichnet, daß** die Bewegung der einzelnen Elemente während des Ab- und Aufpressens in Abhängigkeit von den Überwachungssignalen von Initiatoren mittels einer zentralen Steuereinrichtung steuerbar sind.

9. Vorrichtung nach einem der voranstehenden Ansprüche, **dadurch gekennzeichnet, daß** das jeweils mindestens drei in regelmäßigen Winkelabständen (β) angeordnete Gegendruckelemente (27) und Arretierlemente (26) vorhanden sind.

10. Vorrichtung nach einem der voranstehenden Ansprüche, **dadurch gekennzeichnet, daß** der Radsatz (51) mittels eines Radsatzhubtisch (80) in eine Arbeitsposition hebbar ist.

11. Vorrichtung nach einem der voranstehenden Ansprüche, **dadurch gekennzeichnet, daß** der Radsatz (51) auf einem Gleisstück (70) in die Vorrichtung (1) förderbar ist und an dem der Vorrichtung (1) zugeordneten Ende des Gleisstücks (70) eine Radsatzfangvorrichtung angeordnet ist.

12. Vorrichtung nach Anspruch 10, **dadurch gekennzeichnet, daß** der Radsatz (51) auf dem Radsatzhubtisch (80) rollengelagert ist.

13. Vorrichtung nach einem der Ansprüche 10 bis 12, **dadurch gekennzeichnet, daß** der Radsatzhubtisch (80) um eine vertikal ausgerichtete Achse um mindestens 180° verschwenkbar ist.
